(19) Europäisches Patentamt
European Patent Office
Office européen des brevets

(11) **EP 2 261 611 A1**

(12) **EUROPÄISCHE PATENTANMELDUNG**

(43) Veröffentlichungstag:
**15.12.2010 Patentblatt 2010/50**

(51) Int Cl.:
***G01F 3/08*** *(2006.01)*

(21) Anmeldenummer: **10005840.3**

(22) Anmeldetag: **07.06.2010**

(84) Benannte Vertragsstaaten:
**AL AT BE BG CH CY CZ DE DK EE ES FI FR GB
GR HR HU IE IS IT LI LT LU LV MC MK MT NL NO
PL PT RO SE SI SK SM TR**
Benannte Erstreckungsstaaten:
**BA ME RS**

(30) Priorität: **10.06.2009 DE 102009024521**

(71) Anmelder: **Sensus Spectrum LLC
Raleigh NC 27615 (US)**

(72) Erfinder:
• **Hege, Gerhard
67245 Lambsheim (DE)**
• **Chu, Ahn Tuan
67071 Ludwigshafen (DE)**

(74) Vertreter: **Patentanwälte Möll, Bitterich & Dr.
Keller
Westring 17
76829 Landau (DE)**

(54) **Verfahren zum Reduzieren der durch den Spalt zwischen Trennwand und Ringkolbenwand eines Ringkolbenzählers fließenden Bypassströmung**

(57) Die Erfindung betrifft ein Verfahren zum Reduzieren der durch den Spalt (s) zwischen Trennwand (1) und Ringolbenwand (2) fließenden Bypassströmung eines Ringkolbenzählers. Die minimale Breite (a) der Lücke im Ringkolbenmantel (2) wird wie folgt dimensioniert:

$$a = d * R / \sqrt{(R + A) * (R - A)}$$

- mit
d = Dicke der Trennwand (1),
R = mittlerer Radius des Ringkolbenmantels (2),
A = Abstand zwischen dem Zentrum der Messkammer und dem Zentrum des Ringkolbenführungszapfens (5),
- wobei ferner gilt:

$$a = d + s.$$

Fig.1

**Beschreibung**

Die Erfindung betrifft Verfahren zum Reduzieren der durch den Spalt zwischen Trennwand und Ringkolbenwand eines Ringkolbenzählers fließenden Bypassströmung gemäß dem Oberbegriff des Anspruchs 1.

Wichtigstes Teil eines Ringkolbenzählers sind die Messkammer und der in der Messkammer oszillierende Ringkolben. Der Ringkolben wird während des Messvorgangs von der Hochdruckseite nach der Niederdruckseite geschoben. Dies geschieht selbsttätig durch den Wasserstrom, der in der Messkammer fortlaufend in Messerkammerfüllungen zerlegt wird.

Bei einer Drehung des Kolbens werden zwei verschiedene Volumina von gleichbleibender und bestimmter Größe transportiert. Hierbei bewegt sich der Ringkolben mit seinem Kolbenzapfen um den Grundstift auf dem Boden der Messkammer.

Der Ringkolben besteht im Wesentlichen aus einem zylindrischen Kolbenmantel, der durch einen Kolbenboden unterteilt ist. Kolbenmantel und Kolbenboden sind radial geschlitzt. Dieser Schlitz bewegt sich bei jeder Ringkolbendrehung einmal hin- und hergehend entlang einer radialen Trennwand. Durch eine innere und eine äußere Kolbenführung ist die Bewegung des Ringkolbens damit zwangsläufig oszillierend. Ein oberer Kolbenzapfen treibt einen Mitnehmer an, der die kreisende Bewegung des Zapfens auf ein Zählwerk überträgt.

Durch die Druckdifferenz zwischen Einlass und Auslass des Ringkolbenzählers entstehen Kräfte, die den Ringkolben gegen die Trennwand drücken. Mit entsprechend großer Kraft reibt der Kolben auf der Trennwand. Daher sind nach längerem Gebrauch erhebliche Verschleißerscheinungen an der Trennwand und dem Kolbenmantel zu beobachten.

Die Messgenauigkeit eines Ringkolbenzählers hängt weitgehend von der Maßhaltigkeit der Messerkammerteile ab. Je kleiner die Spalte zwischen Ringkolben und Messkammer, umso weniger Flüssigkeit kann ungemessen hindurchströmen, umso geringer ist also der Messfehler. Ein Mindestspiel zwischen Ringkolben und Messkammer muss jedoch aus tunktionstechnischen Gründen bleiben. Es versteht sich, dass die Ungenauigkeit der Messung steigt, wenn die Spalte durch Verschleiß größer werden. Die Spalte wirken sich dann besonders negativ aus, wenn durch irgendwelche Ursachen, zum Beisplel Sand oder Rostpartikel, der Ringkolben blockiert wird.

Es versteht sich, dass bei kleinen Durchflussmengen die Messungenaulgkelt am höchsten ist, weil das durch die Spalte ungemessen vorbeiströmende Fluid den Ringkolben nicht antreibt.

Da der Ringkolben aufgrund seiner von der Trennwand geführten Oszillation Winkelstellungen zwischen einem positiven und einem negativen Maximalwinkel zur Trennwand einnimmt, muss die Breite des radialen Schlitzes im Ringkolbenmantel deutlich größer sein als die Dicke der Trennwand. Um ein Klemmen des Kolbens zu verhindern, muss die tatsächliche Schlitzbreite sogar noch größer sein. Dies hat zur Folge, dass in allen anderen Winkelstellungen des Ringkolbens, insbesondere in den Null-Grad-Stellungen, sich ein unvermeidbarer Spalt einstellt, durch den ungemessenes Fluid passiert.

Selbstverständlich hat es nicht an Versuchen gefehlt, die systembedingten Spalte zwischen Trennwand und Kolbenmantel zu reduzieren. Versuche, die Spalte durch elastische Uppen oder elastische Oberflächenbeläge zu beseitigen, konnten nicht zum Erfolg führen, weil dadurch die Beweglichkeit des Ringkolbens und damit die Messgenaulgkeit insbesondere bei kleinen Durchflüssen reduziert wurden. In der EP 0627614B1 wird vorgeschlagen, die Dicke der Trennwand zu variieren. Dieser Vorschlag scheiterte nicht zuletzt an den erheblichen Bearbeitungskosten der Trennwand. Im Übrigen konnte auch diese Trennwand das Problem des großen Verschleißes und der damit über eine längere Betriebszeit einhergehenden wachsenden Messungenauigkeit nicht beheben.

Waren Messkammer und Kolben eines Ringkolbenzählers ursprünglich entweder aus Metall, z. B. Messing, Bronze oder Gussstahl, oder aus Duroplast oder Hartgummi, so werden sie seit einigen Jahren zunehmend aus thermoplastischem Kunststoff gespritzt. Thermoplastischer Kunststoff ist deutlich leichter, preiswerter, einfacher zu verarbeiten und nicht korrosionsanfällig. Ebenso entfällt die gesundheitliche Problematik von Messing oder Bronze völlig. Allerdings ist die mechanische Stabilität von thermoplastischem Kunststoff deutlich geringer als die von Metall, so dass alle Wandstärken deutlich größer gemacht werden müssen, um die im Betrieb auftretenden teils erheblichen Kräfte aufnehmen zu können. Das hat jedoch eine entsprechende Vergrößerung der Spalte zwischen Trennwand und Kolbenmantel und damit einhergehend vergrößerten Bypassströmungen und eine verringerte Messgenauigkeit zur Folge. Das Ist unbefriedigend.

Der vorliegenden Erfindung liegt die Aufgabe zugrunde, bei Ringkolbenzählem der eingangs genannten Art die Bypassströmung durch die Spalte zwischen Trennwand und Kolbenmantel zu reduzieren.

Diese Aufgabe wird gelöst durch Ringkolbenzähler, hergestellt nach Verfahren mit den Merkmalen des Anspruchs 1.

Dank der Festigkeit von Stahl kann die Dicke der Trennwand auf ein Minimum reduziert werden. Mit der Dicke der Trennwand werden auch die Spalte zwischen Trennwand und Kolbenmantel reduziert, wodurch die Messgenauigkeit wie gewünscht steigt. Aufgrund der Festigkeit von Stahl sind die Oberflächen der Trennwand praktisch verschleißfrei. Zusätzlich hat sich herausgestellt, dass der Reibkoeffizient des Kunststoffs, aus dem der Ringkolben besteht, gegenüber poliertem Edelstahl, merkbar geringer ist als der Reibkoeffizient von Kunststoff auf Kunststoff. Dies bedeutet, dass der Kolben noch leichter läuft und insbesondere der Verschleiß am Schlitz des Kolbenmantels reduziert ist. Damit bleibt der ursprüngliche, bereits auf das absolute Minimum reduzierte Spalt zwischen Trennwand und Schlitz des Kolbenmantels auch über eine deutlich verlängerte Betriebszeit hinaus klein, die Messgenauigkeit des Ringkolbenzählers über die verlängerte Betriebszeit hinaus hoch.

Weiterbildungen der Erfindung sind Gegenstand der Unteransprüche.

Anhand der Zeichnung sollen die Erfindung und ihre Ausgestaltungen in Form eines Ausführungsbeispiels näher erläutert werden. Es zeigen jeweils rein schematisch

Fig. 1    eine Draufsicht auf einen Ringkolbenzähler bei einer minimalen und einer maximalen Winkelstellung des Ringkolbens und

Fig. 2    einen vergrößerten Ausschnitt aus Fig.1.

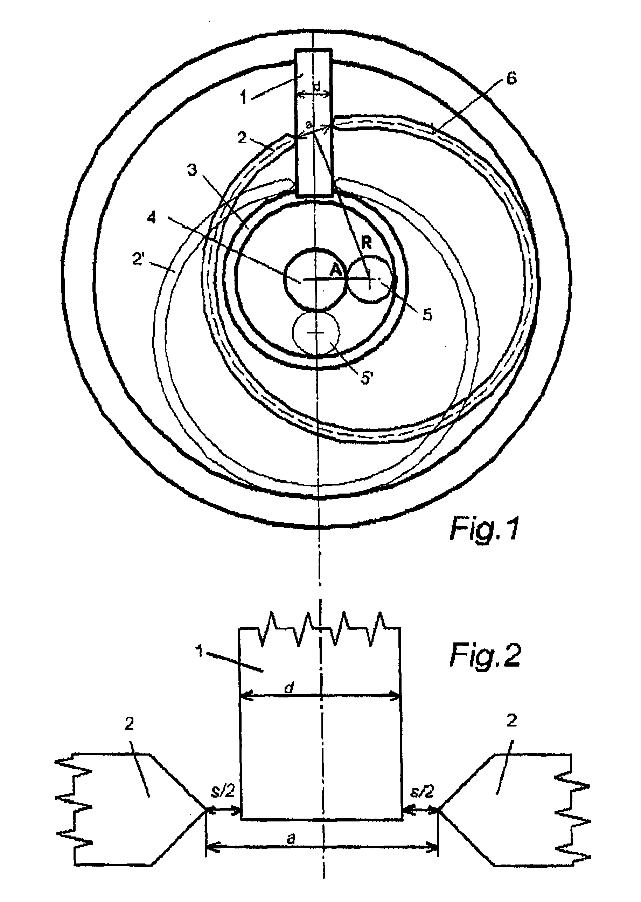

Fig. 1 zeigt rein schematisch einen Blick in einen Ringkolbenzähler bei einer minimalen und einer maximalen Winkelstellung des Ringkolbens. Im Zentrum der Messkammer steht ein Grundstift 4, der konzentrisch von einem Führungsring 3 umgeben ist. Zwischen Grundstift 4 und Führungsring 3 ist ein Führungszapfen 5, 5' eines Ringkolbens geführt, von dem nur der Kolbenmantel 2,2' dargestellt ist. Zwischen Führungsring 3 und Messkammermantel befindet sich eine Trennwand 1, die den Ringkolben führt und die Einlassseite des Ringkolbenzählers von dessen Auslassseite trennt.

Fig. 1 zeigt den Ringkolbenmantel 2 in seiner extremen Auslenkung sowie den Hingkolbenmantel 2' in seiner minimalen Auslenkung. Eingezeichnet sind der mittlere Radius R des Ringkolbenmantels 2,2', der Abstand A zwischen dem Zentrum des Grundstifts 4 und dem Zentrum des Führungszapfens 5, 5', die Dicke d der Trennwand 1 und die Breite d des Schlitzes im Ringkolbenmantel 2, 2'. Mit diesen Größen ergibt sich die minimale Breite d des Schlitzes im Ringkolbenmantel 2, 2' zu

$$a_{min} = d \cdot R / \sqrt{(R + A) \cdot (R - A)} .$$

In der dargestellten extremen Winkelposition liegen die Schlitzflächen des Ringkolbenmanlels 2 ohne Spalt an der Trennwand 1 an. In der Praxis ist die Spaltbreite a etwas größer, da auch in der extremen Winkelposition ein minimaler Spalt zwischen Trennwand 1 und Kolbenmantel 2 verbleiben muss, um ein Klemmen des Ringkolbens zu vermeiden.

Aus der obigen Formel ergibt sich, das die Breite a des Schlitzes im Kolbenmantel 2 reduziert werden kann, indem die Dicke d der Trennwand 1 und/oder der Abstand A zwischen dem Zentrum des Grundstifts 4 und dem Zentrum des Führungszapfens 5 verkleinert und/oder der Radius R des Ringkolbenmantels 2 vergrößert werden.

Fig. 2 zeigt ausschnittsweise ein Stück der Trennwand 1 des Ringkolbenzählers und die Enden des Ringkolbenmantels 2. Dargestellt ist die Situation, wenn die Auslenkung des Ringkolbens minimal ist, was bei einem Umlauf des Ringkolbens zweimal passiert. Da die Spaltbreite a erkennbar größer ist als die Trennwanddikke d, verbleibt rechts und links der Trennwand 1 je ein Spalt der Breite s/2. Durch diese Spalte kann Fluid ungemessen vom Einlass zum Auslass strömen.

Zwar wird der Ringkolben während seiner oszillierenden Bewegung durch die Trennwand 1 geführt, allerdings in der Weise, dass der Mantel 2 des Ringkolben in einer ersten Teilphase der Bewegung an der einen Seite der Trennwand 1, in einer zweiten Teilphase der Bewegung an der anderen Seite der Trennwand 1 anliegt. In seinem Umschaltpunkt zwischen diesen beiden Teilphasen wird der sich bewegende Kolben entlang der Trennwand geführt. Das kann als Toleranz in der Führung des Ringkolbens aufgefasst werden, die sich konstruktionsbedingt als weiterer Spalt, z. B. als Abstand zwischen Kolbenaußenwand und Messkammerinnenwand, wieder finden muss, um das Blockieren des Ringkolbens zu verhindern. Auch durch diesen weiteren, ebenfalls von der Dicke der Trennwand abhängigen Spalt kann Fluid ungemessen vom Einlass zum Auslass strömen, was die Messgenauigkeit des Ringkolbenzählers weiter reduziert.

Durch Reduzierung der Trennwanddicke d auf das unter Berücksichtigung der während des Betriebs auftretenden maximalen Belastungen minimale Maß reduzieren sich sowohl die Schlitzbreite a als auch insbesondere die Spalte s, wodurch, wie oben ausgeführt, die ungemessene Fluidmenge entsprechend zurück geht, der Antrieb des Ringkolbens 2 verbessert wird und die Messgenauigkeit steigt. Die Verwendung von Stahl, insbesondere poliertem Edelstahl, erlaubt eine maximale Reduzierung der Trennwanddicke d. Gleichzeitig geht der Verschleiß an dieser Stelle zurück, einerseits weil die Oberflächen der aus poliertem Stahl bestehenden Trennwand 1 nicht abgenutzt werden und weil durch den reduzierten Reibkoeffizienten der Materialkombination "polierter Stahl - mit Graphit modifizierter thermoplastischer Kunststoff' der Verschleiß an den Schlitzflächen des Ringkolben 2 ebenfalls reduziert ist.

Insgesamt erhält man mit minimalem Aufwand einen Ringkolbenzähler mit verringertem Materialeinsatz, verringerten Spaltbreiten, verringertem Verschleiß, verbesserter Messgenauigkeit, verbessertem Anlaufverhalten und verlängerter Lebensdauer.

**Patentansprüche**

1.   Verfahren zum Reduzieren der durch den Spalt (s) zwischen Trennwand (1) und Ringkolbenwand (2) fließenden Bypassströmung eines Ringkolbenzählers, **dadurch gekennzeichnet, dass** die minimale Breite (a) der Lücke Im Ringkolbenmantel (2) wie folgt dimensioniert wird:

$$a = d * R / \sqrt{(R + A)*(R - A)}$$

- mit
d = Dicke der Trennwand (1),
R = mittlerer Radius des Ringkolbenmantels (2),
A = Abstand zwischen dem Zentrum der Messkammer und dem Zentrum des Ringkolbenführungszapfens (5),
- wobei ferner gilt:

$$a = d + s.$$

2. Verfahren nach Anspruch 1, **dadurch gekennzeichnet, dass** die Trennwand (1) unter Berücksichtigung der während des Betriebs auftretenden maximalen Belastungen auf minimale Dicke ($d_{min}$) dimensioniert wird.

3. Verfahren nach Anspruch 1, 2 oder 3, **dadurch gekennzeichnet, dass** die Trennwand (1) aus rostfreiem Stahl, die übrigen Teile von Messkammer und Ringkolben aus Kunststoff hergestellt werden.

4. Verfahren nach Anspruch 3, **dadurch gekennzeichnet, dass** die Trennwand (1) aus Edelstahl gewalzt wird.

5. Verfahren nach Anspruch 3 oder 4, **dadurch gekennzeichnet, dass** mit Graphit gefüllter Kunststoff verwendet wird.

*Fig.1*

*Fig.2*

Europäisches
Patentamt

European
Patent Office

Office européen
des brevets

# EUROPÄISCHER RECHERCHENBERICHT

**Nummer der Anmeldung**

EP 10 00 5840

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2006 035904 A1 (M & FC HOLDING LLC [US]) 7. Februar 2008 (2008-02-07) | 1,2 | INV. G01F3/08 |
| Y | * Absätze [0024] - [0037]; Abbildungen * ----- | 3-5 | |
| X,D | EP 0 627 614 A1 (SAPPEL SA [FR]) 7. Dezember 1994 (1994-12-07) * das ganze Dokument * ----- | 1,2 | |
| Y | WO 03/036242 A1 (AQUAMETRO AG [CH]; GSCHWIND MARKUS [CH]) 1. Mai 2003 (2003-05-01) * Seite 2, Absatz 2 * ----- | 3-5 | |
| Y | EP 1 296 121 A1 (ACTARIS SAS [FR]) 26. März 2003 (2003-03-26) * Absätze [0008] - [0017]; Abbildungen * ----- | 3-5 | |
| | | | **RECHERCHIERTE SACHGEBIETE (IPC)** G01F |

Der vorliegende Recherchenbericht wurde für alle Patentansprüche erstellt

| Recherchenort | Abschlußdatum der Recherche | Prüfer |
|---|---|---|
| München | 28. September 2010 | Politsch, Erich |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 00 5840

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-09-2010

| Im Recherchenbericht angeführtes Patentdokument | Datum der Veröffentlichung | Mitglied(er) der Patentfamilie | Datum der Veröffentlichung |
|---|---|---|---|
| DE 102006035904 A1 | 07-02-2008 | EP 2047217 A1 | 15-04-2009 |
| | | WO 2008014872 A1 | 07-02-2008 |
| EP 0627614 A1 | 07-12-1994 | DE 69405293 D1 | 09-10-1997 |
| | | DE 69405293 T2 | 15-01-1998 |
| | | ES 2110709 T3 | 16-02-1998 |
| | | FR 2706033 A1 | 09-12-1994 |
| | | US 5495756 A | 05-03-1996 |
| WO 03036242 A1 | 01-05-2003 | KEINE | |
| EP 1296121 A1 | 26-03-2003 | AT 412879 T | 15-11-2008 |
| | | DK 1293760 T3 | 02-03-2009 |
| | | EP 1293760 A1 | 19-03-2003 |
| | | ES 2316534 T3 | 16-04-2009 |
| | | FR 2829837 A1 | 21-03-2003 |
| | | US 2003075827 A1 | 24-04-2003 |
| | | ZA 200207328 A | 12-03-2004 |

EPO FORM P0461

Für nähere Einzelheiten zu diesem Anhang : siehe Amtsblatt des Europäischen Patentamts, Nr.12/82

**EP 2 261 611 A1**

**IN DER BESCHREIBUNG AUFGEFÜHRTE DOKUMENTE**

**In der Beschreibung aufgeführte Patentdokumente**

• EP 0627614 B1